(19) Europäisches Patentamt
European Patent Office
Office européen des brevets

(11) Publication number: **0 652 248 A2**

(12) **EUROPEAN PATENT APPLICATION**

(21) Application number: **94117780.0**

(51) Int. Cl.6: **C08G 77/445**, C08L 101/00

(22) Date of filing: **10.11.94**

(30) Priority: **10.11.93 JP 304749/93**

(43) Date of publication of application:
**10.05.95 Bulletin 95/19**

(84) Designated Contracting States:
**DE FR GB**

(71) Applicant: **Shin-Etsu Chemical Co., Ltd.**
**6-1, Otemachi 2-chome**
**Chiyoda-ku**
**Tokyo 100 (JP)**

(72) Inventor: **Ono, Ichiro, c/o Silicone Elec. Mat. Res. Center**
**Shin-Etsu Chem. Co., Ltd,**
**1-10, Ohaza Hitomi**
**Matsuidacho,**
**Usui-gun,**
**Gunma-ken (JP)**
Inventor: **Miyadai, Shinji, c/o Silicone Elec. Mat. Res. Ctr**
**Shin-Etsu Chem. Co., Ltd,**
**1-10, Ohaza Hitomi**
**Matsuidacho,**
**Usui-gun,**
**Gunma-ken (JP)**
Inventor: **Ichinohe, Shoji, c/o Silicone Elec. Mat. Res. Ctr**
**Shin-Etsu Chem. Co., Ltd,**
**1-10, Ohaza Hitomi**
**Matsuidacho,**
**Usui-gun,**
**Gunma-ken (JP)**

(74) Representative: **Patentanwälte Dr. Solf & Zapf**
**Candidplatz 15**
**D-81543 München (DE)**

(54) **Modifier for synthetic resins.**

(57) Disclosed is a modifier for synthetic resins which comprises a silicone-grafted polyester containing a polyester as trunk polymer and organopolysiloxanes as branch polymers and having a softening point of no lower than 80 °C.

EP 0 652 248 A2

## FIELD OF THE INVENTION

The present invention relates to a modifier for synthetic resins and, more particularly, to a modifier capable of conferring lubricity, water repellency and releasability on the moldings of synthetic resins.

## BACKGROUND OF THE INVENTION

With the intention of modifying the lubricity, water repellency and releasability of the surfaces of molded synthetic resins, there have so far been proposed the methods of applying waxes, such as paraffin, carnauba wax, polyethylene, metal soaps or silicone oils, such as dimethylsilicone oil, phenylmethylsilicone oil, to the moldings' surfaces; or the methods of adding modifiers as cited above to the resin compounds to be molded.

Of those modifiers, dimethylsilicone oil has been prevailingly used because it is not only especially superior to the others in water, repellency and releasability but also has lubricity characteristics suitable for synthetic resins and excellent chemical inertness and thermal stability.

With the prominent features described above, dimethylsilicone oil still has drawbacks such that lubricity characteristics thereof proves insufficient to moldings according to the end-use purpose of the moldings and, in the case where it is added to synthetic resins, the effect thereof as modifier has only a short duration because of its poor compatibility with synthetic resins.

For the purpose of mitigating such drawbacks, there have been proposed the compounds for modification use, which have improved compatibilities with synthetic resins, in Japanese Tokko Sho 58-50664, Japanese Tokkai Sho 56-41256 and Japanese Tokko Hei 2-55459 (the term "Tokko" as used herein means an "examined patent publication" and the term "Tokkai" as used herein means an "unexamined published patent application").

In cases where it is required of those compounds to confer heat-resisting lubricity and heat-resisting releasability on synthetic-resin moldings to which they are added, they fail to produce sufficient effect, although they are superior to the aforesaid silicone oil in permanence of lubricity, water repellency and releasability because of their good compatibilities with synthetic resins.

As a reason for such a defect, it can be thought that since those compounds for modification use are liquid at ordinary temperature or have low melting points even if they are solid at ordinary temperature, they gradually ooze out of the moldings' surface as the moldings are exposed to the air of a temperature higher than their melting points.

In order to solve the above-described problem, the present inventors have made intensive studies. As a result thereof, it has been found out that a modifier containing as a main component a silicone-grafted polyester having an intended softening point can last its modifying effects for a long period of time even when it is added to synthetic-resin moldings of which heat-resisting releasability and heat-resisting lubricity are required, because it hardly oozes out of the surfaces of the synthetic-resin moldings, thereby achieving the present invention.

## SUMMARY OF THE INVENTION

Therefore, an object of the present invention is to provide a modifier for synthetic resins which can continuously confer lubricity, water repellency and releasability on synthetic-resin moldings even when heat-resisting releasability and heat-resisting lubricity are required of the moldings.

The above-described object is attained with a modifier for synthetic resins, which comprises a silicone-grafted polyester whose trunk polymer is a polyester, whose branch polymers are organopolysiloxanes and whose softening point is not lower than 80 °C .

The modifier according to the present invention can continuously confer high releasability, water repellency and lubricity on the surface of synthetic resin moldings because of its good compatibility with synthetic resins. Moreover, since the present modifier for synthetic resins contains as a main component a silicone-grafted polyester having a softening point of no lower than 80 °C, the modifier component does not ooze out of the moldings' surface even when the modifier is added to the synthetic resin moldings of which heat-resisting releasability and heat-resisting lubricity are required, and so the modifying effect thereof can be maintained over a long period of time.

DETAILED DESCRIPTION OF THE INVENTION

As for the polyester as trunk polymer in the present invention, any polyesters can serve for the purpose so far as they can provide a softening point of no lower than 80°C when silicones are grafted thereon. However, it is preferable for the polyester as trunk polymer to be a polyester prepared from a polyhydric alcohol and a polycarboxylic acid and/or a derivative thereof by making them undergo condensation polymerization. Therein, it is advantageous in particular that from 80 to 100 mole % of the polycarboxylic acid and/or a derivative thereof be an aromatic dicarboxylic acid and/or a derivative thereof.

Polyhydric alcohols suitably used herein are diol compounds. Specific examples of such diol compounds include ethylene glycol, propylene glycol, 1,4-butanediol, 1,3-butanediol, 2,3-butanediol, diethylene glycol, dipropylene glycol, triethylene glycol, 1,5-pentanediol, 1,6-hexanediol, neopentyl glycol, 2,2,4-trimethylpentane-1,3-diol, hydrogenated bisphenol A, 2,2-di(4-hydroxyethoxyphenyl)propane and 2,2-di(4-hydroxypropoxyphenyl)propane. Further, there may be added thereto triol compounds, such as glycerol, trimethylolethane, trimethylolpropane, pentaerythritol, or tetraol compounds, provided that their amounts added are small enough not to produce any gelled matter.

Specific examples of a polycarboxylic acid or a derivative thereof which can be used include dicarboxylic acids, such as maleic acid, fumaric acid, citraconic acid, itaconic acid, phthalic acid, isophthalic acid, terephthalic acid, succinic acid, adipic acid, sebacic acid, azelaic acid; dicarboxylic acid anhydrides, such as maleic anhydride, phthalic anhydride; lower alkyl esters of dicarboxylic acids, such as dimethyl maleate, dimethyl phthalate, dimethyl adipate, etc.; and dicarboxylic acid chlorides, such as terephthalic acid chloride, adipic acid chloride.

Although 1,2,4-benzenetricarboxylic acid, 2,5,7-naphthalenetricarboxylic acid, anhydrides thereof or lower alkyl esters thereof may be added to the above-recited ones in such small amounts as not to produce any gelled matter, it is preferable that from 80 to 100 mole % of the polycarboxylic acid and/or the derivative thereof be constituted of aromatic dicarboxylic acids and/or the derivatives thereof, with examples including phthalic acid, isophthalic acid, terephthalic acid, phthalic anhydride, dimethyl terephthalate and terephthalic acid chloride.

The polyesters which can form the trunk polymer of the present invention can be obtained using a conventional method for production of polyesters, wherein polyhydric alcohols and polycarboxylic acids and/or derivatives thereof undergo condensation polymerization in the atmosphere of an inert gas at a temperature ranging from 150 to 280°C and, if necessary, under reduced pressure.

In producing the polyesters, there can be used a catalyst generally used for acceleration of esterification, such as tetrabutyl zirconate, zirconium naphthenate, tetrabutyl titanate, tetraoctyl titanate, tetraphenyltin, dibutyltin dichloride, dibutyltin dilaurate, dibutyltin oxide, zinc acetate, calcium acetate, antimony oxide and stannous oxalate.

As for the thus obtained polyesters which can form the trunk polymer in the present invention, it is desirable that they have their weight average molecular weights in the range of 2,000 to 100,000, determined in the polystyrene-converted form by GPC (which stands for Gel Permeation Chromatography). When the weight average molecular weight as defined above is less than 2,000, the grafted polymers prepared from such a trunk polymer have too low softening points; whereas when it is increased beyond 100,000 the compatibilities thereof with synthetic resins are decreased.

As for the organopolysiloxanes which can form branch polymers in the present invention, methylpolysiloxanes, especially those having their weight average molecular weights in the range of 200 to 10,000, determined by GPC in the polystyrene-converted form, are preferable from the standpoints of releasability, water repellency and lubricity which they can confer on synthetic resins. When the weight average molecular weight as defined above is less than 200, the releasability, water repellency and lubricity conferred thereby on synthetic resins are insufficient; whereas when it is increased beyond 10,000 the compatibilities thereof with synthetic resins are decreased.

A silicone-grafted polyester to constitute the main component of the present modifier for synthetic resins can be produced using two representative methods as described below:

A first method consists in allowing a polyesterpolyol containing hydroxyl groups in its side chains to react with an isocyanate group-containing organopolysiloxane represented by the following general formula (1), (2) or (3) as disclosed in U.S. Patent 5,250,614, Japanese Kokkai Hei 6-116390 and Japanese Kokkai Hei 6-25661;

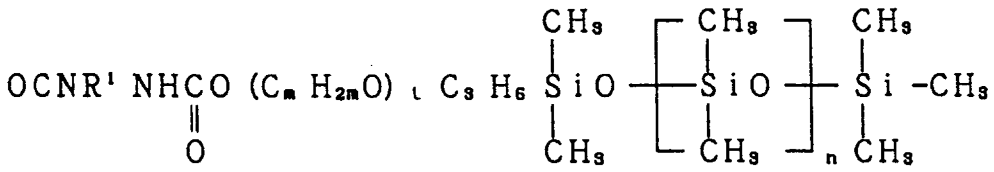 (1)

wherein $R^1$ represents a divalent organic group, ℓ is a natural number from 0 to 50, m is 2 or 3, and n is an integer from 1 to 130;

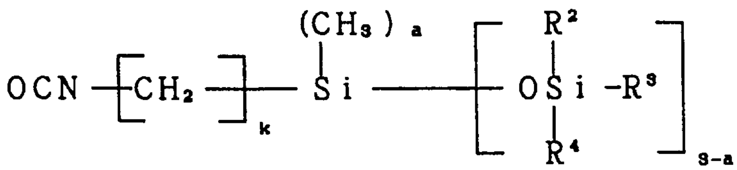 (2)

wherein $R^2$, $R^3$ and $R^4$ each represent a methyl group or $-OSi(CH_3)_3$, k is an integer from 1 to 10, and a is a natural number from 0 to 2;

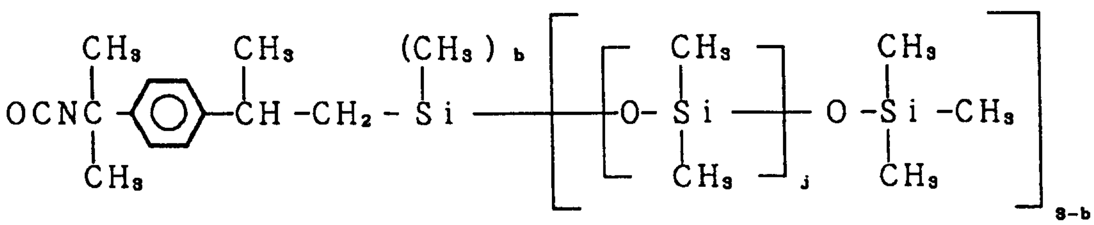 (3)

wherein b is a natural number of 0 to 2, and j is a natural number of 0 to 130.

Although any solvent is not particularly required in the foregoing reaction, it is advantageous to use a certain solvent for rendering the reaction system homogeneous since the polyesterpolyol is in a solid state at ordinary temperature and incompatible with the isocyanate group-containing organopolysiloxane before the reaction.

Specific examples of a solvent which can be used in this reaction include esters such as methyl acetate, ethyl acetate, butyl acetate, isobutyl acetate; ketones such as acetone, methyl ethyl ketone, methyl isobutyl ketone, diisobutyl ketone, cyclohexanone, etc., aromatic hydrocarbons such as benzene, toluene, xylene; and ethers such as diethyl ether, dibutyl ether, tetrahydrofuran and dioxane. These solvents can be used alone or as a mixture of two or more thereof.

In the foregoing reaction, there can be optionally used one or more of a conventional catalyst used for the production of polyurethanes, e.g, organotin compounds such as dibutyltin dilaurate, dibutyltin dioctate, tin dioctate, tertiary amine compounds such as triethylamine, N-ethylmorpholine, N,N,N',N'-tetramethyl-1,3-butanediamine, 1,4-diazabicyclo(2,2,2)octane, 1,8-diazabicyclo(5,5,0)-undecene-7.

As for the catalyst, it is desirable for the purpose of completing the reaction in a short time that the catalyst be added in a proportion of from 0.01 to 5 % by weight, particularly from 0.05 to 2 % by weight, to the isocyanate group-containing organopolysiloxane. Suitable temperature and time for this reaction are 50-100 °C and 1-20 hours respectively.

A second method consists in using an organopolysiloxane containing as one terminal group a functional group capable of forming two ester linkages, as represented by the following general formula (4) or (5), in the condensation polymerization of a polyhydric alcohol with polycarboxylic acid and/or a derivative thereof, thereby performing cocondensation polymerization:

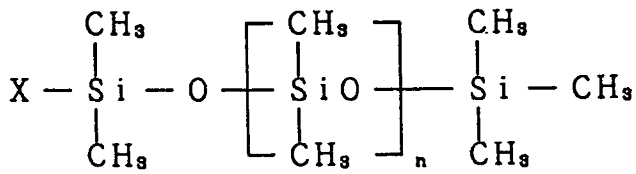

(4)

wherein X is a monovalent organic group containing a functional group capable of forming two ester linkages, and n is an integer from 1 to 130;

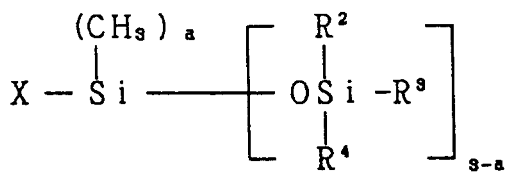

(5)

wherein X has the same meaning as in general formula (4), and a, $R^2$, $R^3$ and $R^4$ have the same meanings as in general formula (2).

X does not have any other particular restrictions so far as it is a monovalent organic group and contains a functional group capable of forming two ester linkages. However, it is particularly preferable for the functional group to be a diol, dicarboxylic acid, carboxylic acid anhydride or epoxy group. Specific examples of a preferred functional group include the groups represented by the following formulae (6), (7), (8), (9), (10) and (11) respectively:

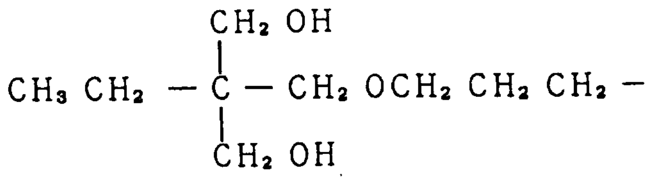

(6)

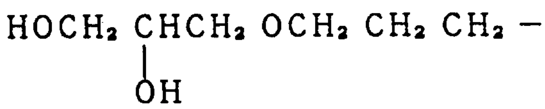

(7)

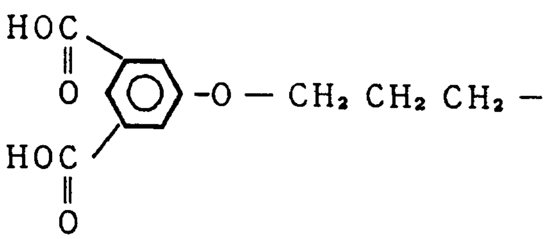

(8)

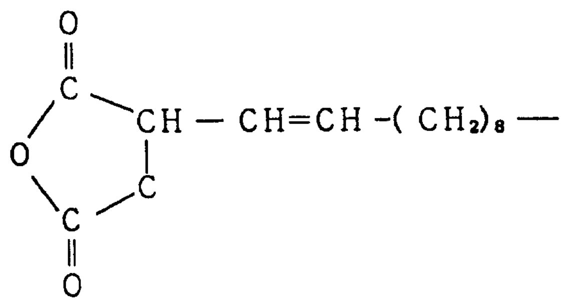

(9)

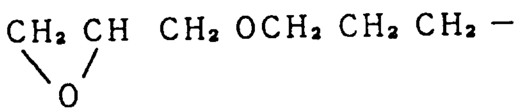

(10)

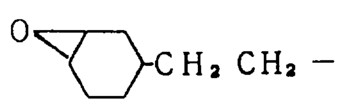

(11)

It is desirable in the present silicone-grafted polyester that the ratio between the polyester component, which forms the trunk polymer, and the organopolysiloxane component, which forms the branch polymers, range from 97/3 to 50/50 by weight, particularly from 95/5 to 70/30 by weight.

When the proportion of the polyester component in the grafted polyester is increased beyond 97 % by weight, the resulting polyester cannot confer sufficient releasability, water repellency and lubricity on synthetic resins; whereas when it is decreased below 50 % by weight the resulting polyester becomes low in softening point and compatibility with synthetic resins.

Moreover, the drop in durability at high temperatures is caused with respect to releasability and lubricity when the softening point of the silicone-grafted polyester is lower than 80 ° C.

To the present modifier for synthetic resins, there may be optionally added other conventional additives for resins to be molded.

The silicone-grafted polyester according to the present invention is added to a synthetic resin to be molded in an amount depending on the kind of the synthetic resin, the purpose of modification and the compatibility with the synthetic resin. In general, the amount of the grafted polyester added is in the range of 0.1 to 20 parts by weight, particularly preferably 0.5 to 10 parts by weight, per 100 parts by weight of the resin to be molded. When the amount added is less than 0.1 part by weight, the grafted polyester cannot bring about sufficient effect upon the conferment of releasability, water repellency and lubricity; while even when it is increased beyond 20 parts by weight the effect cannot be enhanced any more.

As for the way of adding the solid silicone-grafted polyester, the grafted polyester may be added at ordinary temperature as it is, or it may be added in the form of solution by being dissolved in an appropriate solvent before the addition. Specific examples of a solvent which can be used in the latter way of addition include the solvents recited above as those usable in the reaction of a polyesterpolyol with an isocyanate group-containing organopolysiloxane, alcohols such as isopropyl alcohol, n-butanol, etc., cellosolves such as methyl cellosolve, ethyl cellosolve, butyl cellosolve, cellosolve acetate. These solvents can be used alone or as a mixture of two or more thereof.

The present modifier has no particular restrictions as to the synthetic resins to which it is applied. However, it is advantageous that the present modifier is added to a solvent-dissolved or molten synthetic resin. Therefore, it is desirable that the synthetic resins be soluble in solvents or have a melting point (or a softening point). More specifically, the present modifier is applicable to a resin properly chosen from known resins, e.g., polyethylene resins, polypropylene resins, polyvinyl chloride resins, polystyrene resins, ABS resins, AB resins, SB resins, vinyl chloride-vinyl acetate copolymer resins, polymethylmethacrylate resins, saturated polyester resins, polyamide resins, polyurethane resins, epoxy resins, phenol resins, amino resins, polycarbonate resins, polyfluorated olefin resins, cellulose resins, polybutadiene resins, alkyd resins, melamine resins.

As for the concrete use of the present modifier, there is no particular limitation. However, the present modifier is especially effective when it is applied to materials of which heat-resisting releasability and heat-resisting lubricity are required, e.g., a transfer sheet or a transferred sheet used for heat-sensitive transfer recording, printed plywood, magnetic recording media.

The present invention will now be illustrated in more detail by reference to the following examples. However, it should be understood that these examples are not be construed as limiting the scope of the invention in any way.

## SYNTHESIS EXAMPLES

### Synthesis Example of Polyesterpolyol:

In a one-liter glass flask equipped with a stirrer, a thermometer, a condenser, an ester adaptor and a decompression device, 196.6 g of dimethyl terephthalate, 37.5 g of phthalic anhydride, 285.5 g of 2,2-di(4-hydroxypropoxyphenyl)propane, 157.1 g of ethylene glycol, 23.3 g of glycerol and 0.33 g of tetrabutyl titanate were placed, and heated for 6 hours at 160-170 °C by means of a mantle heater as they were exposed to nitrogen gas, thereby completing the demethanolization reaction. Therein, the amount of the methanol as distillate received in the ester adaptor was 61.3 g.

Then, the temperature of the reaction mixture was raised up to 220 °C by one-hour heating, and the resulting reaction mixture was further heated at 220-240 °C for 3 hours under a reduced pressure of 20 mmHg, thereby undergoing the reaction for removal of ethylene glycol. The amount of ethylene glycol thus distilled off was 120.4 g. At the conclusion of the reaction, the polymer obtained was cooled down to room temperature. Thus, 471.4 g of a polyesterpolyol were obtained as a light-brown transparent solid. This polyesterpolyol had a polystyrene-converted average molecular weight of 10,260 in the determination by GPC, a softening point of 122 °C in the determination by the ring-and-ball method, and a glass transition point of 67 °C in the determination by DSC (which stands for a differential scanning calorimetry). In addition, the hydroxyl value thereof was 38.6 mg KOH/g (according to JIS K0070).

### Synthesis Example 1 of Silicone-Grafted Polyester:

In a one-liter glass flask equipped with a stirrer, a thermometer and a condenser, a 150 g portion of the polyesterpolyol obtained in the Synthesis Example described above and 30 g of toluene were placed, and dissolved at 60 °C. The solution was admixed with 0.17 g of dibutyltin laurate and 17.8 g of an isocyanate

group-containing organopolysiloxane represented by the following formula (12), and heated at 75 °C for 5 hours under exposure to nitrogen gas, thereby undergoing the reaction.

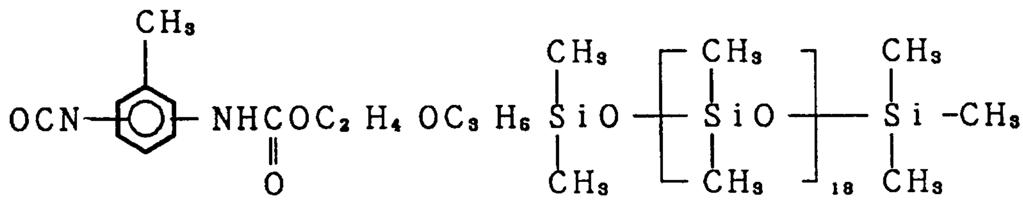 (12)

An IR spectrum analysis of the resulting reaction solution was carried out. While the absorption band at 2,260 cm $^{-1}$ attributed to NCO, which was observed before the mixture underwent the reaction, disappeared from the IR spectrum, there were observed the absorption bands at 800 cm$^{-1}$, 1,020 cm$^{-1}$, 1094 cm $^{-1}$ and 1,260 cm $^{-1}$ ascribable to methylpolysiloxanes. Accordingly, the product obtained was ascertained to be the polyester on which methylpolysiloxanes were grafted.

From the reaction solution, toluene as the solvent was removed by stripping. Thus, 151.2 g of a silicone-grafted polyester were obtained as a light-brown translucent solid.

The silicone-grafted polyester thus obtained had a polystyrene-converted average molecular weight of 11,500 in the determination by GPC, a softening point of 97 °C in the determination by the ring-and-ball method, and a glass transition point of 51 °C in the determination by DSC.

Synthesis Example 2 of Silicone-Grafted Polyester:

Another silicone-grafted polyester was prepared in the same manner as in Synthesis Example 1, except that 35.2 g of a compound represented by the following formula (13) were used in place of the isocyanate group-containing organopolysiloxane of formula (12). Thus, 171.8 g of a silicone-grafted polyester were obtained as light-brown translucent solid.

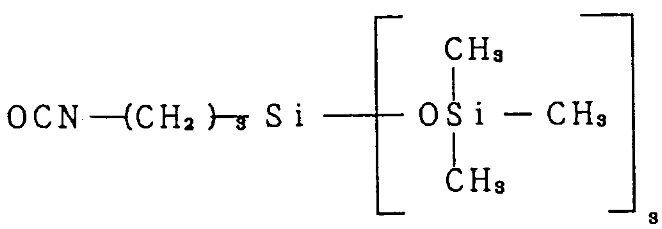 (13)

The silicone-grafted polyester thus obtained had a polystyrene-converted average molecular weight of 12,300 in the determination by GPC, a softening point of 115°C in the determination by the ring-and-ball method, and a glass transition point of 55 °C in the determination by DSC.

Synthesis Example 3 of Silicone-Grafted Polyester:

In a one-liter glass flask equipped with a stirrer, a thermometer, a condenser, an ester adaptor and a decompression device, 155.2 g of dimethyl terephthalate, 29.6 g of phthalic anhydride, 210.0 g of 2,2-di(4-hydroxypropoxyphenyl)propane, 124.0 g of ethylene glycol, 37.0 g of an epoxy group-containing organopolysiloxane represented by the following formula (14) and 0.26 g of tetrabutyl titanate were placed, and heated for 6 hours at 160-170°C by means of a mantle heater as they were exposed to nitrogen gas, thereby completing the demethanolization reaction. Therein, the amount of the methanol as distillate received in the ester adaptor was 51.1 g.

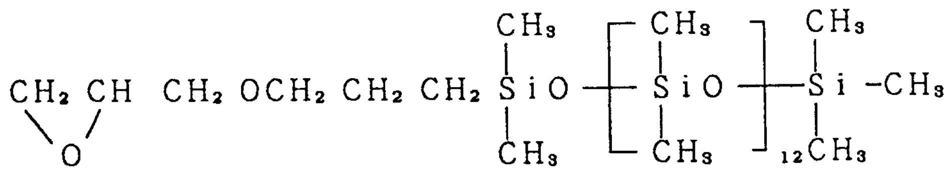

(14)

Then, the temperature of the reaction mixture was raised up to 220 °C by one-hour heating, and the resulting reaction mixture was further heated at 220-240°C for 3 hours under a reduced pressure of 20 mmHg, thereby undergoing the reaction for removal of ethylene glycol. The amount of ethylene glycol thus distilled off was 85.3 g. At the conclusion of the reaction, the polymer obtained was cooled down to room temperature. Thus, 326.7 g of a light-brown transparent solid were obtained. As a result of the IR spectrum analysis, this solid was ascertained to be the polyester on which methylpolysiloxanes were grafted. The thus obtained silicone-grafted polyester had a polystyrene-converted average molecular weight of 14,300 in the determination by GPC, a softening point of 118°C in the determination by the ring-and-ball method, and a glass transition point of 63 °C in the determination by DSC.

Synthesis Example 4 of Silicone-Grafted Polyester:

Still another silicone-grafted polyester was prepared in the same manner as in Synthesis Example 3, except that 185.5 g of a compound represented by the following formula (15) were used in place of the epoxy group-containing organopolysiloxane of formula (14). Thus, 519.7 g of a light-brown translucent solid were obtained. Therein, the amounts of methanol and ethylene glycol distilled off were 51.0 g and 105.1 g, respectively.

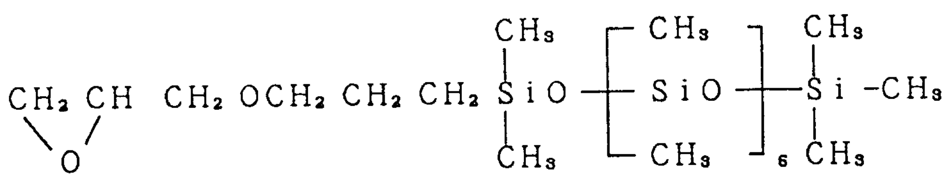

(15)

As a result of the IR spectrum analysis, the thus obtained solid was ascertained to be the polyester on which methylpolysiloxanes were grafted. This silicone-grafted polyester had a polystyrene-converted average molecular weight of 20,700 in the determination by GPC, a softening point of 100°C in the determination by the ring-and-ball method, and a glass transition point of 30 °C in the determination by DSC.

Comparative Synthesis Example of Silicone-Grafted Polyester:

A light-yellow transparent liquid was obtained in an amount of 155.4 g in the same manner as in Synthesis Example 1, except that a liquid (at ordinary temperature) polyesterpolyol prepared from adipic acid and diethylene glycol by condensation polymerization (Adeca New Ace F15-22, trade name, products of Asahi Denca Kogyo Co., Ltd.) was used in place of the solid polyesterpolyol prepared in Synthesis Example 1.

EXAMPLES 1 TO 4

The reaction product obtained from a 1:1 by weight mixture of an epoxy resin (Epikote 1004, trade name, products of Shell International Chemicals Corp.) with linseed oil was dissolved in toluene so as to have a concentration of 50 % by weight. One part by weight of the solution obtained was mixed with 3 parts by weight of an acrylic resin (Alon 1001, trade name, products of Toa Gosei Chemical Industry Co., Ltd.), and the resulting mixture was diluted with toluene so that the resin component might have a concentration of 40 % by weight.

The thus prepared paint was admixed with 1 % by weight of the silicone-grafted polyester obtained in each of Synthesis Examples 1 to 4 as a toluene solution (solid concentration: 20 % by weight), and then flow-coated on an aluminum test panel (5 cm × 10 cm in size). Thereafter, the coated paints were each air-dried for 1 hour, and baked at 105 °C for 20 minutes. The thus processed paint coatings were each examined for not only the appearance but also the kinetic friction coefficient, the slip angle, the water contact angle and the damage resistance. Further, the paint-coated test panels were subjected to a 10-minute heat treatment at 150 °C or a one-hour boiling treatment in boiled water. Additionally, a brief summary of the silicone-grafted polyester-added paints and the treatment conditions thereof is given in Table 1. Then, the thus treated test panels underwent the same examinations as described above. The examination results obtained are shown in Table 2.

The data shown in Table 2 were determined as follows:

Kinetic Friction Coefficient;

It was determined using a kinetic friction coefficient measuring device (made by Kyowa Kagaku Co., Ltd.) under a condition that the friction element was a stainless steel ball (SUS Ball), the load was 50 g and the speed was 20 cm/min.

Slip Angle;

Each test panel was cut into two pieces (measuring 5 cm× 5 cm in size). One piece was superposed on the other so that their paint film surfaces might be brought into contact with each other, and thereon was imposed a load of 250 g. Under such a condition, an angle at which the panel piece began to slip was measured.

Water Contact Angle;

5 ml of water was dropped on each test panel held in the horizontal position, and the contact angle of the dropped water was measured with a contact angle meter CA-A (made by Kyowa Kagaku Co., Ltd.).

Damage of Paint Film;

Each test panel was cut into two pieces of the same size (5 cm × 5 cm). These pieces were superposed on each other so that their paint film surfaces might be brought into contact with each other, and one piece was forced to slip on the other as a load of 250 g was imposed thereon. Then, slip damage caused to the paint film surface was observed.

COMPARATIVE EXAMPLES 1 TO 3

The same paint as used in Examples was admixed with a substitute for the silicone-grafted polyesters used in Examples. Specifically, the substitute was the silicone-grafted polyester obtained in Comparative Synthetic Example in Comparative Example 1, while it was a dimethylsilicone oil (20 cs; KF-96, trade name, products of Shin-etsu Chemical Co., Ltd.) in Comparative Example 2. Additionally, no substitute was added to the paint in Comparative Example 3. These paints each underwent the same examinations as in Examples. The results obtained are also shown in Table 2.

Table 1

| | Modifier | After-Treatment of Test Panel |
|---|---|---|
| Example 1 | Synthetic Example 1 | ① not received<br>② 150 °C /10 minutes<br>③ 1-hour boiling |
| Example 2 | Synthetic Example 2 | ① not received<br>② 150 °C /10 minutes<br>③ 1-hour boiling |
| Example 3 | Synthetic Example 3 | ① not received<br>② 150 °C /10 minutes<br>③ 1-hour boiling |
| Example 4 | Synthetic Example 4 | ① not received<br>② 150 °C /10 minutes<br>③ 1-hour boiling |
| Comparative Example 1 | Comparative Synthetic Example | ① not received<br>② 150 °C /10 minutes<br>③ 1-hour boiling |
| Comparative Example 2 | KF-96 20cs | ① not received<br>② 150 °C /10 minutes<br>③ 1-hour boiling |
| Comparative Example 3 | Not added | not received |

Table 2

| | | Kinetic Friction Coefficient | Slip Angle (° ) | Water Contact Angle (° ) | Damage of Paint Film | Appearance of Paint Film Surface |
|---|---|---|---|---|---|---|
| Example 1 | ① | 0.25 | 23 | 95 | No scars and no haze | beautiful |
| | ② | 0.24 | 23 | 97 | ditto | ditto |
| | ③ | 0.25 | 23 | 94 | ditto | ditto |
| Example 2 | ① | 0.35 | 0.28 | 90 | ditto | ditto |
| | ② | 0.24 | 0.27 | 92 | ditto | ditto |
| | ③ | 0.25 | 0.29 | 90 | ditto | ditto |
| Example 3 | ① | 0.30 | 25 | 95 | ditto | ditto |
| | ② | 0.28 | 24 | 95 | ditto | ditto |
| | ③ | 0.29 | 25 | 94 | ditto | ditto |
| Example 4 | ① | 0.26 | 23 | 98 | ditto | ditto |
| | ② | 0.24 | 23 | 100 | ditto | ditto |
| | ③ | 0.26 | 24 | 96 | ditto | ditto |
| Comparative Example 1 | ① | 0.25 | 23 | 96 | ditto | ditto |
| | ② | 0.40 | 26 | 83 | Slight scars and slight haze | ditto |
| | ③ | 0.60 | 30 | 70 | ditto | somewhat like a citron skin |
| Comparative Example 2 | ① | 0.38 | 27 | 90 | ditto | beautiful |
| | ② | 0.43 | 31 | 85 | ditto | ditto |
| | ③ | 0.75 | 37 | 67 | Considerable scars and haze | somewhat like a citron skin |
| Comparative Example 3 | | 0.80 | 37 | 65 | ditto | ditto |

## Claims

1. A modifier for synthetic resins, comprising a silicone-grafted polyester which is constituted of a polyester as trunk polymer and organopolysiloxanes as branch polymers and has a softening point of

no lower than 80 °C.

2. A modifier according to claim 1, wherein the trunk polymer is a polyester prepared from a polyhydric alcohol and a polycarboxylic acid and/or a derivative thereof by making them undergo condensation polymerization and the branch polymers are methylpolysiloxanes.

3. A modifier according to claim 2, wherein from 80 to 100 mole % of the polycarboxylic acid and/or the derivative thereof is an aromatic dicarboxylic acid and/or a derivative thereof.

4. A modifier according to claim 2, wherein the polyhydric alcohol is a diol compound.

5. A modifier according to claim 2, wherein the polyester has a weight average molecular weight in the range of 2,000 to 100,000, determined in the polystyrene-converted form by Gel Permeation Chromatography.

6. A modifier according to claim 2, wherein the methylpolysiloxanes have a weight average molecular weight ranging from 200 to10, 000, determined in the polystyrene-converted form by Gel Permeation Chromatography.

7. A modifier according to claim 1, wherein the silicone-grafted polyester is constituted of from 97 to 50 % by weight of the trunk polymer and from 3 to 50 % by weight of the branch polymers.

8. A modifier according to claim 3, wherein the aromatic dicarboxylic acid and/or the derivative thereof is a compound chosen from a group consisting of phthalic acid, isophthalic acid, terephthalic acid, phthalic anhydride, dimethyl terephthalate and terephthalic acid chloride.

9. A modifier according to claim 4, wherein the diol compound is a diol selected from a group consisting of ethylene glycol, propylene glycol, 1,4-butanediol, 1,3-butanediol, 2,3-butanediol, diethylene glycol, dipropylene glycol, triethylene glycol, 1,5-pentanediol, 1,6-hexanediol, neopentyl glycol, 2,2,4-trimethylpentane-1,3-diol, hydrogenated bisphenol A, 2,2-di(4-hydroxyethoxyphenyl)propane and 2,2-di(4-hydroxypropoxyphenyl)propane.

10. Synthetic resin moldings containing a modifier as claimed in claim 1, wherein the modifier is contained in an amount of from 0.1 to 20 parts by weight per 100 parts by weight of the synthetic resin.

11. A method of modifying a synthetic resin, comprising adding a modifier as claimed in claim 1 in an amount of from 0.1 to 20 parts by weight per 100 parts by weight of the synthetic resin.